# EUROPEAN PATENT SPECIFICATION

(11) **EP 1 960 058 B1**
(45) Date of publication and mention of the grant of the patent: **23.06.2010**
(21) Application number: 06820052.6
(22) Date of filing: 14.11.2006
(51) Int. Cl.: A62C 2/06, F16L 5/04

(54) **FIRE DAMPER BARRIER FLANGE**
BRANDSCHUTZKLAPPENSPERRENFLANSCH
REBORD DE SEPARATION IGNIFUGE

(30) Priority: 13.12.2005 FI 20051278
(43) Date of publication of application: 27.08.2008
(73) Proprietor: Fläkt Woods AB, 55184 Jönköping (SE)
(72) Inventor: KAAKINEN, Antti, FI-37800 Toijala (FI)
(74) Representative: Heinänen, Pekka Antero
(86) International application number: PCT/FI2006/000371
(87) International publication number: WO 2007/068787

(56) References cited:
- EP-A1- 0 900 964
- WO-A1-02/090811
- GB-A- 2 216 220
- GB-A- 2 334 770

## Description

The present invention relates generally to a circular fire barrier flange which is mountable close to the pass-through point of a fire damper on a wall or ceiling structure, where it is adapted about the duct sleeve element of the fire barrier to receive heat conducted along the duct element and further conduct the heat to the basic structure wherein or whereon it is mounted, and which flange has placed thereon a tightening band with a width substantially equal to the thickness of the barrier flange and a length extending substantially about the perimeter of the barrier flange.

Accordingly, the invention more particularly relates to a fire damper of a - circular cross section, wherein the damper blade obviously also is circularly shaped. Broadly, the function of a fire damper is such that under normal conditions the blade is either in an open or a closed position as desired. Under fire, the fusible link of the fire damper melts thus allowing the blade to close if it has previously been in its open position.

The fire damper is mounted in, for instance, a wall or ceiling structure or on the surface thereof. Onto the duct sleeve of the fire damper is generally mounted a circular fire barrier flange serving to receive the heat conducted along the duct sleeve and forward the heat to the wall structure (when the fire barrier is mounted against the wall). Additionally, the fire barrier flange may be employed for sealing the perforation of the duct sleeve element that serves to retard thermal conduction in the fire damper duct. Still further, a fire barrier flange can be utilized in the mounting of a fire damper on a wall surface.

The fire barrier flange is conventionally fabricated into a single element either by casting or cutting from a prefabricated material such as a calcium silicate plate. A problem handicapping the use of a single-part fire barrier flange is its complicated installation. Moreover, casting such an object is a clumsy and time-consuming operation due to the lengthy drying period.

It is an object of the present invention to provide for a fire barrier flange that is free from the above-described problem and offers better leakproofness than prior-art constructions under fire. The fire barrier flange according to the invention in **characterized in that** the fire barrier flange comprises two or more circumferentially adjoining members having an intumescent seal material placed at the joints thereof and that a protective plate is placed over each joint to protect the intumescent seal material under fire.

A preferred embodiment according to the invention is **characterized in that** the protective plate is planar and substantially rectangular in shape and that the protective plate is placed over the joint so as to face the surface of the fire barrier flange.

Another preferred embodiment according to the invention is **characterized in that** the protective plate is fixed in place with the help of the bent outer edge of the tightening band.

The calcium silicate plate used as the material of the fire barrier flange undergoes dimensional deformations under heat whereby it contracts. Then, the intumescent material fills the expanding gap and also develops a compressive force that closes any cracks possibly occurring at other parts of the plate. Owing to the protective plate covering the joint, the intumescent seal material stays in place and thus promotes the leakproofness of the fire damper under fire.

The invention is next described in more detail with the help of a preferred exemplifying embodiment by making reference to the appended drawings in which
FIG. 1 shows an axonometric view of a wall portion having a fire damper of circular cross section mounted thereon;
FIG. 2 shows the assembly of FIG. 1 now in a side view;
FIG. 3 shows a fire damper blade according to the invention with only one member of the fire barrier flange mounted in place;
FIG. 4 shows the assembly of FIG. 3 now with a second member of the fire barrier flange mounted in place; and
FIG. 5 shows the assembly of FIG. 4 now with a tightening band placed about the fire barrier flange.

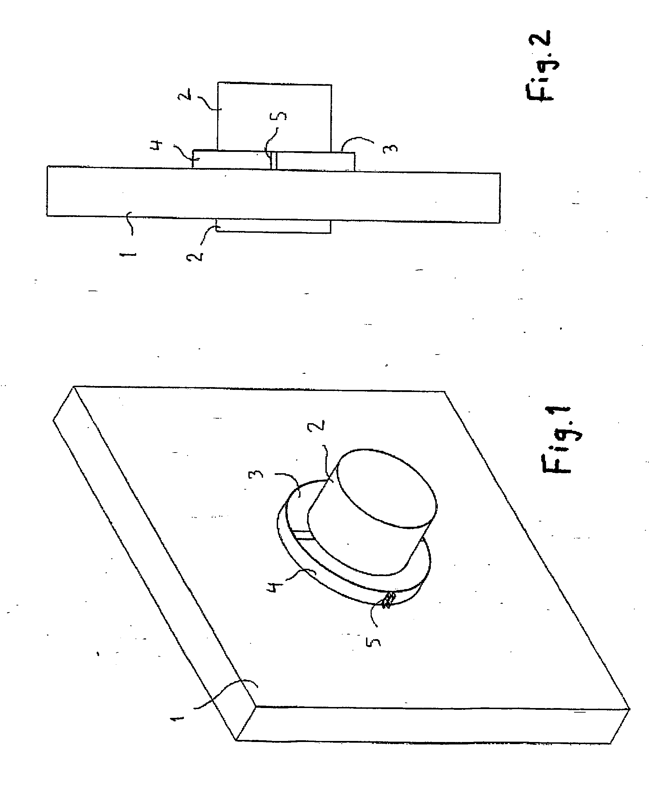

Accordingly, the invention relates to fire damper of a circular cross section mounted in a hole made through a wall 1. This kind of mounting is illustrated in more detail in FIGS. 1 and 2. The fire damper typically comprises an air duct sleeve element 2 extending through the thickness of wall 1 and a fire barrier flange 3 surrounding the duct sleeve element so as to face the wall. About the fire barrier flange is adapted a tightening band 4 having a width substantially covering the thickness of the flange 3 and a length substantially extending over the entire perimeter of the flange. The tightening band is tensioned in place by means of screws, for instance, as illustrated in the diagrams at the tightening point denoted by reference numeral 5.

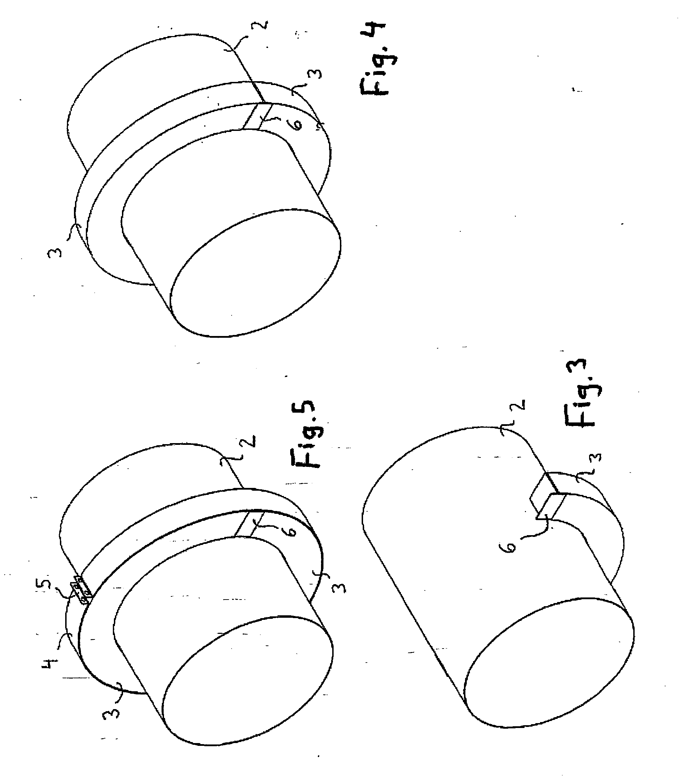

FIGS. 3-5 show the different mounting steps of a fire damper according to the invention. The wall 1 illustrated in FIGS. 1 and 2 has intentionally been omitted from these diagrams. Then, FIG. 3 shows only the fire damper sleeve element 2 and one half of the fire barrier flange 3. In this exemplifying embodiment, the fire barrier flange 3 comprises two substantially identical parts, of which only one is illustrated in FIG. 3. To the end of this illustrated part is mounted a protective plate 6, fabricated from a metal sheet into a planar and substantially rectangular shape.

FIG. 4 shows a mounting step wherein also the second part of the fire barrier flange 3 has been mounted in place, whereby the completed fire barrier flange forms a substantially uniform annular structure about the duct sleeve element 2 of the fire damper.

FIG. 5 shows a mounting step wherein the fire barrier flange 3 has been secured with the help of a metallic tightening band 4, for instance. The ends of the band are bent into tabs 5 having holes with the help of which the tightening band 4 can be firmly secured in place. As a result, also the two parts of the fire barrier flange 3 and its protective plates (one at either joint), as well as the intumescent seals situated at the joints, remain confined in place. In order to keep the protective plates 6 affixed, the outer edge of the tightening band is bent inwardly.

As is evident from FIG. 5, the metallic protective plate 6 covers the entire area of the joint of the fire barrier flange 3 thus securing that the intumescent seal prone to become brittle under fire stays within the joint, whereby the leakproofness of the fire damper under fire is extended.

To a person skilled in the art it is obvious that the invention is not limited by the above-described exemplary embodiments, but rather may be varied within the scope of the appended claims. Accordingly, the fire barrier flange may be comprised of multiple parts instead of two. Also its material may be other than a calcium silicate plate used in the exemplifying embodiment. Furthermore, the material of the intumescent seal may be varied according to a given purpose. While the fire barrier flange is most advantageously placed against a wall, the applications of the invention are not limited thereto.

## Claims

1. A circular fire barrier flange (3) which is mountable close to the pass-through point of a fire damper on a wall or ceiling structure, where it is adapted about the duct sleeve element (2) of the fire barrier to receive heat conducted along the duct element and further conduct the heat to the wall structure (1) wherein or whereon it is mounted, and which flange (3) has placed thereon a tightening band (4) with a width substantially equal to the thickness of the barrier flange and a length extending substantially about the perimeter of the barrier flange, which fire barrier flange (3) comprises two or more circumferentially adjoining members, **characterized in that** an intumescent seal material is placed at the joints of the members of the fire barrier flange and that a protective plate (6) is placed over each joint to protect the intumescent seal material under fire.

2. The fire barrier flange of claim 1, **characterized in that** the shape of the protective plate is planar and substantially rectangular and that the protective plate (6) is placed over the joint so as to face the surface of the fire barrier flange.

3. The fire barrier flange of claim 1 or 2, **characterized in that** the protective plate is fixed in place with the help of the bent outer edge of the tightening band.

## Patentansprüche

1. Kreisförmiger Flansch (3) einer Feuerbarriere, der nahe an einer Durchlassstelle einer Feuerschutzklappe an einer Wand- oder Deckkonstruktion montierbar ist, wo er um ein Durchgangsrohrelement (2) der Brandschutzklappe angelegt ist, um Wärme aufzunehmen, die entlang des Durchgangselements geleitet wird, und um die Wärme weiter zu der Wandkonstruktion (1) zu leiten, in der oder an der er montiert ist, wobei an dem Flansch (3) ein Spannband (4) angebracht ist, dessen Breite im Wesentlichen gleich der Dicke des Feuerbarrieren-Flansches ist und dessen Länge sich im Wesentlichen um den Perimeter des Feuerbarrieren-Flansches erstreckt, wobei der Feuerbarrieren-Flansch (3) zwei oder mehr sich in Umfangsrichtung anschließende Elemente umfasst, **dadurch gekennzeichnet, dass** ein intumeszentes Dichtungsmaterial an den Fugen der Elemente des Feuerbarrieren-Flansches angeordnet ist und dass eine Schutzplatte (6) über jeder Fuge angebracht ist, um das intumeszente Dichtungsmaterial bei Feuer zu schützen.

2. Feuerbarrieren-Flansch nach Anspruch 1, **dadurch gekennzeichnet, dass** die Form der Schutzplatte eben und im Wesentlichen rechteckig ist und dass die Schutzplatte (6) so über der Fuge angeordnet ist, dass sie der Oberfläche des Feuerbarrieren-Flansches zugekehrt ist.

3. Feuerbarrieren-Flansch nach Anspruch 1 oder 2, **dadurch gekennzeichnet, dass** die Schutzplatte mit Hilfe der umgebogenen Außenkante des Spannbandes in ihrer Lage fixiert ist.

## Revendications

1. Rebord circulaire de séparation ignifuge (3) qui peut être monté à proximité du point de passage d'un registre coupe-feu sur une structure de paroi ou de plafond, dans lequel il est adapté autour de l'élément de manchon de conduit (2) de la séparation ignifuge afin de recevoir la chaleur conduite le long de l'élément de conduit et en outre conduire la chaleur vers la structure de paroi (1) dans laquelle ou sur laquelle il est monté, et lequel rebord (3), a placée sur celui-ci, une bande de serrage (4) avec une largeur sensiblement égale à l'épaisseur du rebord de séparation et une longueur s'étendant sensiblement autour du périmètre du rebord de séparation, lequel rebord de séparation ignifuge (3) comprend deux éléments circonférentiellement attenants ou plus, **caractérisé en ce qu'**un matériau d'étanchéité intumescent est placé au niveau des joints des éléments du rebord de séparation ignifuge et **en ce qu'**une plaque de protection (6) est placée sur chaque joint pour protéger le matériau d'étanchéité intumescent contre le feu.

2. Rebord de séparation ignifuge selon la revendication 1, **caractérisé en ce que** la forme de la plaque de protection est plane et sensiblement rectangulaire et **en ce que** la plaque de protection (6) est placée sur le joint afin de faire face à la surface du rebord de séparation ignifuge.

3. Rebord de séparation ignifuge selon la revendication 1 ou 2, **caractérisé en ce que** la plaque de protection est fixée en place à l'aide d'un bord externe courbé de la bande de serrage.
